# EUROPÄISCHE PATENTANMELDUNG

(11) **EP 3 637 140 A1**
(43) Veröffentlichungstag der Anmeldung: **15.04.2020**
(21) Anmeldenummer: 19198312.1
(22) Anmeldetag: 19.09.2019
(51) Int. Cl.: G01S 17/42, G01S 7/481, G01S 7/497

(54) **OPTOELEKTRONISCHER SENSOR UND VERFAHREN ZUR ERFASSUNG VON OBJEKTEN**

(30) Priorität: 09.10.2018 DE 102018124835
(71) Anmelder: SICK AG, 79183 Waldkirch (DE)
(72) Erfinder: Pastor, Sebastian, 79194 Gundelfingen (DE); Fürstenberg, Kay, 79111 Freiburg (DE)

(57) **Zusammenfassung**

Es wird ein optoelektronischer Sensor (10) zur Erfassung von Objekten in einem Überwachungsbereich (18) angegeben, der einen Lichtsender (12) zum Aussenden eines Sendelichtstrahls (16), eine Ablenkeinheit (20) zum Ablenken des Sendelichtstrahls (16) ohne mechanische bewegte Teile oder höchstens mit mikromechanischen bewegten Teilen, um den Überwachungsbereich (18) abzutasten, einen Lichtempfänger (28) zum Erzeugen eines Empfangssignals aus dem von den Objekten remittierten Sendelichtstrahl (24) sowie eine Steuer- und Auswertungseinheit (30) aufweist, die dafür ausgebildet ist, anhand des Empfangssignals Informationen über die Objekte zu bestimmen. Dabei weist der Sensor (10) mindestens ein Referenzziel (32) auf, das zumindest einen Teil des abgelenkten Sendelichtstrahls (16, 36) bei mindestens einem Ablenkwinkel der Ablenkeinheit (20) empfängt oder zu dem Lichtempfänger (28) zurückführt, um ein Referenzsignal zu erzeugen, und die Steuer- und Auswertungseinheit (30) dafür ausgebildet ist, anhand des Referenzsignals die Funktionsfähigkeit der Ablenkeinheit (20) zu prüfen.

## Beschreibung

Die Erfindung betrifft einen optoelektronischen Sensor und ein Verfahren zur Erfassung von Objekten in einem Überwachungsbereich nach dem Oberbegriff von Anspruch 1 beziehungsweise 15.

Optische Abtastung wird schon lange in Laserscannern eingesetzt. Dabei überstreicht ein von einem Laser erzeugter Lichtstrahl mit Hilfe einer Ablenkeinheit periodisch den Überwachungsbereich und misst jeweils mit einem Lichtlaufzeitverfahren den Abstand zum angetasteten Objekt. In einem Pulsverfahren werden dafür Lichtpulse ausgesandt, und es wird die Dauer zwischen Sende- und Empfangszeitpunkt gemessen. In einem Phasenverfahren erfolgt eine periodische Amplitudenmodulation und Messung des Phasenversatzes zwischen Sende- und Empfangslicht. Neben der gemessenen Abstandinformation wird die Winkellage der Ablenkeinheit und damit des Objektes bestimmt, und so entstehen nach einer Abtastperiode Messpunkte mit Abstands- und Winkelwerten in Polarkoordinaten. Durch zusätzliche Variation oder Mehrstrahlabtastung im Elevationswinkel werden dreidimensionale Messpunkte aus einem Raumbereich erzeugt. Die Abtastung erfordert zwar besonders im Falle der 3D-Erfassung gegenüber Kameras eine gewisse Messzeit, aber dafür konzentriert sich die Messung auf einen Punkt und gewinnt dadurch Reichweite und verlässlichere Messwerte.

In den meisten Laserscannern wird die Abtastbewegung durch einen Drehspiegel oder ein Spiegelrad mit mehreren Facetten erreicht. Es ist auch bekannt, stattdessen den gesamten Messkopf mit einem oder mehreren Lichtsendern und Lichtempfängern rotieren zu lassen, wie dies beispielsweise in DE 197 57 849 B4 beschrieben ist. In wieder anderen Systemen wird eine Ablenkeinheit hin- und herverschwenkt. Jegliche mechanische Bewegung führt jedoch zu einer gewissen Baugröße und Stoßempfindlichkeit sowie zu Wartungsanfälligkeit infolge von Verschleiß.

Um dies zu vermeiden, gibt es im Stand der Technik Bestrebungen, sogenannte Solid-State-Scanner aufzubauen, also scannende Systeme ohne rotierende Ablenkeinheit oder vergleichbare bewegte mechanische Teile. Beispielsweise wird in der EP 2 708 914 A1 der gepulste Sendelichtstrahl einer Lichtquelle mit einem MEMS-Spiegel in X-Richtung und Y-Richtung über die abzutastende Fläche geführt. Die reflektierten Lichtpulse werden von einem Bildsensor mit zahlreichen Pixeln empfangen, von der jeweils nur diejenigen aktiviert werden, die einen aktuell von dem Sendelichtstrahl beleuchteten Bereich beobachten. Eine weitere Besonderheit in der EP 2 708 914 A1 ist die Verwendung von SPADs (Single-Photon Avalanche Diode) für die Pixel des Bildsensors. SPADs sind Lawinenphotodioden, die im sogenannten Geiger-Modus betrieben werden. Sie werden dazu oberhalb der Durchbruchspannung vorgespannt, so dass bereits ein einziger, durch ein einzelnes Photon freigesetzter Ladungsträger eine nicht mehr kontrollierte Lawine auslösen kann, die dann aufgrund der hohen Feldstärke sämtliche verfügbaren Ladungsträger rekrutiert. SPADs sind nicht nur hochempfindlich, sondern zugleich auch hoch integrierbar.

Ein MEMS-Spiegel ist nur eine von mehreren Möglichkeiten, eine Strahlablenkung ohne bewegte mechanische Teile zu verwirklichen. Andere nicht abschließend genannte Möglichkeiten sind etwa Optical Phased Arrays, akusto-optische Modulatoren oder ektro-optische Modulatoren. Gemeinsam ist diesen Strahlablenkungen, dass sie allenfalls auf mikromechanischer Ebene eine Bewegung erzeugen, wie im Falle von Mikrospiegeln, und jeweils durch beispielsweise Anlegen einer elektrischen Spannung ihre optischen Eigenschaften verändern, um den Ablenkwinkel einzustellen. Einen Motor oder mechanisch bewegte Teile wie einen Drehspiegel, ein Polygonspiegelrad oder einen Schwenkmechanismus gibt es nicht.

Von klassischen Laserscannern mit Drehspiegel ist eine Selbstüberwachung bekannt, wie beispielsweise in der DE 43 40 756 A1 beschrieben. Mit einem internen Referenzzielsystem werden die fehlerfreie Abstandsmessung und deren unbeeinträchtigte Empfindlichkeit überprüft. Das Referenzziel wird in jedem Umlauf der Ablenkeinheit optisch angetastet und das Signalecho im Hinblick auf Signalstärke und Abstandswert ausgewertet. Dazu wird ein Totwinkelbereich im hinteren Gehäuseteil außerhalb des Scanbereichs genutzt. Das lässt sich nicht auf Solid-State-Scanner übertragen, weil es keinen hinteren Totwinkelbereich gibt.

Ein Aspekt der Selbstüberwachung ist die Einhaltung von Augenschutzanforderungen bei starken Lichtquellen und insbesondere den üblicherweise verwendeten Laserlichtquellen. Für einen bewegten Lichtstrahl dürfen höhere Grenzwerte angesetzt werden als bei einem statischen Einstrahlsystem, da die Lichtenergie nur kurzzeitig auf das Auge einwirken kann. Das ist aber nur zulässig, wenn gewährleistet ist, dass der Lichtstrahl tatsächlich nicht aufgrund von Fehlfunktionen an einem Ort verweilt. In einem klassischen Laserscanner wird dazu einfach die Bewegung des Drehspiegels oder des antreibenden Motors überwacht, zumal die aktuelle Drehstellung ohnehin für die Zuordnung der Messwerte benötigt wird. Eine entsprechende Bewegungsüberwachung ist aber in einem Solid-State-Scanner mangels mechanisch bewegter Teile unmöglich.

Im Zusammenhang mit Lichtlaufzeitverfahren ist auch bekannt, Referenzziele für einen ganz anderen Zweck einzusetzen, nämlich um interne Signallaufzeiten sowie Driften durch Effekte wie Temperaturänderung und Alterung zu kompensieren. Dazu wird eine Referenzlaufzeit auf einer wohldefinierten internen Referenzstrecke direkt oder indirekt gemessen und die gemessene Lichtlaufzeit damit korrigiert. Auch die Ausgangsleistung der Lichtquelle lässt sich so bestimmen. Das alles erlaubt aber keinerlei Aussage über die örtlich verteilte Lichtbelastung im Umfeld des Sensors und damit zu Fragen des Augenschutzes.

Die US 7 9720 14 B2 offenbart eine scannende Projektionsvorrichtung, die mit mikromechanisch bewegten und modulierten roten, blauen und grünen Laserstrahlen ein Bild erzeugt. In einem Dunkelbereich am Rand des Bildbereiches wird ein Sensor angeordnet, der einmal pro Frame eine Scanlinie erfasst, um Verzerrungen durch Phasendifferenzen zwischen angesteuerter und tatsächlicher Strahlposition zu beheben und um die horizontale und vertikale Abtastung aus Sicherheitsgründen zu überwachen. Derartige Projektionssysteme erzeugen ein Bild und dienen nicht der optischen Erfassung von Informationen über Objekte.

In einem Projektions- und Beleuchtungssystem nach der US 2011/0211243 A1 wird der Laserstrahl erst auf einen Scanspiegel und dann über ein sogenanntes Sicherungsmaterial nach außen geführt, das durch konzentrierte Laserleistung seine optischen Eigenschaften verändert. Sofern daher der Laserstrahl zu lange an einem Punkt verweilt, verliert das Sicherungsmaterial seine reflektierenden Eigenschaften, und der Laserstrahl tritt nicht mehr aus dem Gerät aus. Das ist aber eine recht spezielle Lösung, und es wäre wünschenswert, ohne ein solches Sicherungsmaterial und darauf abgestimmte Bauräume und Strahlführungen auszukommen.

Es ist daher Aufgabe der Erfindung, die Zuverlässigkeit eines Solid-State-Scanners zu verbessern.

Diese Aufgabe wird durch einen optoelektronischen Sensor und ein Verfahren zur Erfassung von Objekten in einem Überwachungsbereich von Anspruch 1 beziehungsweise 15 gelöst. Es wird ein Sendelichtstrahl ausgesandt und der von den Objekten remittierte Sendelichtstrahl wieder empfangen, um Messinformation über das jeweils angetastete Objekt zu gewinnen. Um den Überwachungsbereich abzutasten, lenkt eine Ablenkeinheit den Sendelichtstrahl in unterschiedliche Ablenkwinkel. Diese Ablenkeinheit ist das Äquivalent zu einem herkömmlichen Drehspiegel, kommt aber ohne mechanisch bewegte Teile aus, wobei mikromechanische Bewegungen wie bei einem MEMS-Spiegel durchaus noch zugelassen sind. Der Sensor ist demnach als Solid-State-Scanner ausgebildet. Die Abtastung des Überwachungsbereichs folgt einem zunächst beliebigen Muster und kann dabei gleichmäßig sein, aber auch bestimmte Teilbereiche (ROI, Region of Interest) häufiger und andere gar nicht betreffen.

Die Erfindung geht von den Grundgedanken aus, die Ablenkung des Sendelichtstrahls mit einem aktiven und/oder passiven Referenzziel zu überwachen. Das Referenzziel ist Teil des Sensors, befindet sich daher in dessen Gehäuse oder ist jedenfalls damit verbunden, etwa außen an dessen Frontscheibe oder deren Rahmen. Das Referenzziel befindet sich im Strahlengang des Sendelichtstrahls oder einer Teilauskopplung davon, und zwar dort im Strahlengang, wo die Ablenkung bereits erfolgt ist. Damit ist über das mittels Referenzziel erzeugte Referenzsignal ein Test möglich, ob die Ablenkung tatsächlich funktioniert, um gegebenenfalls den Lichtsender auszuschalten beziehungsweise die Fehlfunktion zu melden. Das Referenzsignal kann neben diesem Test auf eine gleichsam eingefrorene Ablenkung für weitere Funktionstests genutzt werden.

Die Erfindung hat den Vorteil, dass eine besonders schnelle Bewegung des Sendelichtstrahls möglich ist, die mehr Freiheitsgrade für zwei- und dreidimensionale Abtastungen bietet als ein klassischer Laserscanner mit Drehspiegel. Der Sensor erlaubt außerdem eine besonders kompakte Bauweise und ein preiswertes Sensordesign. Indem die Bewegung des Sendelichtstrahls überwacht wird, kann im Falle einer zu langsamen Bewegung oder gar eines Stillstands der Lichtsender rechtzeitig abgeschaltet werden, um Gesundheitsschäden bei Personen zu vermeiden und die Augensicherheit zu gewährleisten. Außerdem vereinfacht eine selbsttätige Fehlererkennung die Handhabung besonders bei Einbindung in komplexere übergeordnete Systeme.

Das Referenzziel ist bevorzugt als Lichtumlenkung oder als Reflektor ausgebildet. Eine Lichtumlenkung ist beispielsweise ein Prisma, eine Lichtleiterschleife oder dergleichen, die den Sendelichtstrahl in eine andere Richtung führt, nämlich zum Lichtempfänger hin. Ein Reflektor wirft den Sendelichtstrahl ebenfalls direkt oder indirekt auf den Lichtempfänger zurück. Somit kann der eigentliche Lichtempfänger, der in den meisten Ablenkwinkeln für die Abtastung des Überwachungsbereichs und die Gewinnung von Messwerten genutzt wird, auch das Referenzsignal erzeugen. Das Referenzziel selbst ist passiv.

Das Referenzziel führt den Sendelichtstrahl vorzugsweise zu einem bekannten Grad zurück. Dies lässt sich bei einer Lichtumlenkung beispielsweise durch Dämpfungen beziehungsweise Schwärzungen erreichen, bei einem Reflektor durch eine bestimmte Reflexivität. Das ermöglicht nicht nur eine binäre Aussage, ob das Referenzziel getroffen wurde, sondern auch eine graduelle Auswertung anhand eines erwarteten Pegels. Außerdem kann die Leistung des Lichtsenders überwacht werden. Besonders bevorzugt sind mehrere Referenzziele mit unterschiedlichem Reflektionsgrad vorgesehen, zu dem der Sendelichtstrahl zurückgeleitet wird. Dann wird ein entsprechendes Pegelmuster des Referenzsignals erwartet, was eine noch genauere Überwachung ermöglicht.

Das Referenzziel weist bevorzugt einen Referenzlichtempfänger auf, welcher das Referenzsignal erzeugt. Hierbei handelt es sich nun um ein aktives Referenzziel, das Referenzsignal wird nicht im Lichtempfänger für die Erfassung von Messwerten erzeugt. Der Referenzlichtempfänger wird vorzugsweise direkt im Sendelichtstrahl angeordnet, wobei aber eine Strahlumlenkung dazwischen auch vorstellbar ist. Es sind Mischformen mit sowohl mindestens einem passiven Referenzziel mit Strahlrückführung auf den messenden Lichtempfänger als auch mindestens einem aktiven Referenzziel denkbar, welches das Referenzsignal selbst erzeugt.

Das Referenzziel ist bevorzugt bei einem Ablenkwinkel angeordnet, der außerhalb des abgetasteten Überwachungsbereichs liegt. Aufgrund dieser Anordnung wird die Messung nicht gestört. Eine bevorzugte Anordnung ist jenseits des Ablenkwinkelbereichs der Abtastung des Überwachungsbereichs. Da die Abtastung zur Messwerterfassung auch auf Teilbereiche oder ROIs mit Lücken dazwischen beschränkt sein kann, ist auch eine Anordnung des Referenzziels in solchen Lücken denkbar. Eine Alternative ist eine Anordnung des Referenzziels bei Ablenkwinkeln, die dem Überwachungsbereich entsprechen, was dann zu zusätzlichen kleinen Totbereichen oder zumindest lokalen Beeinträchtigungen der Abtastung und Messwerterfassung führt. Durch besondere Auswertung, wie später noch erläutert, können die negativen Auswirkungen begrenzt oder praktisch ausgeschlossen werden.

Die Steuer- und Auswertungseinheit ist bevorzugt dafür ausgebildet, mit Hilfe der Ablenkeinheit periodisch eine Zeile abzutasten. Der Sensor ist dann ein Zeilenscanner. Das Referenzziel befindet sich vorzugsweise am Anfang und/oder Ende der Zeile.

Alternativ ist die Steuer- und Auswertungseinheit dafür ausgebildet, mit Hilfe der Ablenkeinheit ein zweidimensionales Muster abzutasten. Dadurch wird eine flächige und damit umfassendere Abtastung ermöglicht. Das zweidimensionale Muster kann natürlich künstlich auf eine Zeile begrenzt werden, dann entsteht trotzdem ein Zeilenscanner. Ein typisches Muster sieht vor, nacheinander leicht versetzte Zeilen beziehungsweise Spalten und damit systematisch eine Fläche in X-Y-Richtung abzutasten. Prinzipiell ist aber jegliches periodische und nicht periodische Muster vorstellbar, das beispielsweise bestimmte Teilbereiche öfter abtastet als andere, bis hin zu einem Zufallsmuster. Das Referenzziel befindet sich bei zweidimensionaler Abtastung vorzugsweise in den Ecken oder als mindestens ein Streifen oder punktuell am Rand.

Das Referenzziel ist bevorzugt an einer Frontscheibe des Sensors angeordnet. Die Frontscheibe umfasst bestimmungsgemäß sämtliche relevanten Ablenkwinkel, so dass dort alle geeigneten Orte für das Referenzziel zur Verfügung stehen, sei es am Rand oder innerhalb der Ablenkwinkel für die Abtastung des Überwachungsbereichs. Besonders bevorzugt ist das Referenzziel in die Frontscheibe integriert, etwa als reflektierende oder teilreflektierende Beschichtung oder Strukturierung.

Das Referenzziel weist bevorzugt ein Muster aus teilreflektierenden Elementen im Strahlengang des Sendelichtstrahls bei verschiedenen Ablenkwinkeln auf. Dieses Muster ist eine Art Wasserzeichen und beispielsweise auf der Frontscheibe oder einem optischen Element zwischen Lichtsender und Frontscheibe angebracht, und es überlagert die Messung. Unter Umständen, wenn die Empfangs- und Auswertungselektronik dazu in der Lage ist, kann die Teilreflexion an der Frontscheibe im Empfangssignal zeitlich vom später zurücklaufenden remittierten Sendelichtstrahl getrennt werden. Eine andere Auswertungsmöglichkeit besteht darin, die Teilreflexion schwach genug auszubilden, dass eine Einzelmessung davon nicht spürbar beeinträchtigt wird. In einer Mittelung zahlreicher Messungen wird das Muster dann aber dennoch erkennbar. Voraussetzung für ein solches Ausmitteln ist eine hinreichend dynamische Szenerie, wie etwa in einer mobilen Anwendung an einem insbesondere autonomen Fahrzeug oder dergleichen.

Der Sensor weist bevorzugt einen Referenzlichtsender auf, um einen gegenüber dem Sendelichtstrahl versetzten Referenzlichtstrahl zu erzeugen, der von der Ablenkeinheit mit dem Sendelichtstrahl abgelenkt wird. Hier wird der Sendelichtstrahl mit dem zusätzlichen Referenzlichtsender erweitert. Aufgrund des Versatzes gelangt der Referenzlichtstrahl nicht in den Überwachungsbereich, sondern auf das Referenzziel. Wegen der kurzen Wege und um optisches Übersprechen zu minimieren, kann der Referenzlichtsender deutlich schwächer ausgelegt werden. Optisches Übersprechen kann auch durch Strahltrennung etwa mittels Strahlcodierung oder unterschiedlichen Wellenlängen verhindert werden. In einem Ausführungsbeispiel hat der Referenzlichtstrahl einen sehr deutlichen Versatz, so dass damit ein Referenzziel abgetastet wird, das weitgehend oder vollständig abseits des Austrittsbereichs für den Sendelichtstrahl liegt. Ein weiteres Ausführungsbeispiel sieht in einem Zeilenscanner mit schlitzförmigem Austrittsfenster einen parallel dazu verlaufenden Reflektorstreifen als Referenzziel vor, so dass parallel der Sendelichtstrahl den zeilenförmigen Überwachungsbereich und der Referenzlichtstrahl den Reflektorstreifen abtastet. Im letztgenannten Beispiel könnte anstelle eines eigenen Referenzlichtsenders der Strahlquerschnitt des Sendelichtstrahls so gewählt werden, dass der Sendelichtstrahl größtenteils durch das Austrittsfenster und zugleich noch streifend den Reflektorstreifen trifft.

Die Steuer- und Auswertungseinheit ist bevorzugt dafür ausgebildet, zu einem Testzeitpunkt den Sendelichtstrahl mit Hilfe der Ablenkeinheit in einen dem Referenzziel entsprechenden Ablenkwinkel abzulenken. Hier wird also die eigentliche Messung immer wieder unterbrochen, sei es unregelmäßig oder zyklisch nach einigen Frames, Zeilen oder Messpunkten, um den Sendelichtstrahl gezielt für eine Referenzmessung zu nutzen. Das Referenzziel liegt hier an einem prinzipiell völlig beliebigen Ort, vorzugsweise außerhalb der Ablenkwinkel des eigentlichen Überwachungsbereichs, womöglich auch deutlich abseits davon. Solange sich nämlich dieser Ort des Referenzziels noch anfahren lässt, ist ausgesprochen unwahrscheinlich, dass die Ablenkeinheit ansonsten eine Fehlfunktion zeigt.

Die Steuer- und Auswertungseinheit ist bevorzugt dafür ausgebildet, einen Winkelursprung der Ablenkwinkel anhand des Referenzsignals zu prüfen und/oder festzulegen. Das Referenzziel liegt an einer bekannten Position beziehungsweise bei einem bekannten Ablenkwinkel, der zugleich einer X- beziehungsweise (X,Y)-Position entspricht. Deshalb kann die Antastung des Referenzziels für einen Nullpunktabgleich genutzt werden, mit dem das angenommene und das von der Ablenkeinheit tatsächlich angefahrene Koordinatensystem geprüft, kalibriert oder nachgeführt werden.

Der Lichtempfänger weist bevorzugt eine Vielzahl von Lichtempfangselementen oder Pixeln auf, die jeweils unterschiedlichen Ablenkwinkeln zugeordnet sind. Empfangsseitig wird in einem solchen Sensor kein eigentliches Scanprinzip eingesetzt, sondern der gesamte Überwachungsbereich zugleich erfasst, in dem jeweils nur ein bestimmter Bereich von dem Sendelichtstrahl beleuchtet wird. Die Lichtempfangselemente sind vorzugsweise SPADs mit den einleitend genannten Vorteilen einer besonders hohen Empfindlichkeit und Integrationsfähigkeit.

Die Steuer- und Auswertungseinheit ist bevorzugt dafür ausgebildet, jeweils nur diejenigen Lichtempfangselemente zu aktivieren oder auszulesen, die dem jeweiligen aktuellen Ablenkwinkel des Sendelichtstrahls entsprechen. Damit wird auch empfangsseitig eine Art Scanprinzip verwirklicht. Durch die selektive Aktivierung oder das selektive Auslesen werden keine Empfangssignale von Lichtempfangselementen erzeugt oder ausgewertet, die zum Nutzsignal nicht beitragen können. Bei einer SPAD-Matrix als Lichtempfänger können SPADs dadurch inaktiv geschaltet werden, dass die Vorspannung unter die Durchbruchspannung abgesenkt wird. Sie verlieren dann um mehrere Größenordnungen an Empfindlichkeit und können deshalb als ausgeschaltet angesehen werden. Das Inaktivschalten hat auch den Vorteil, dass keine unnötigen Lawinen ausgelöst werden, die nur Stromaufnahme und Wärmeentwicklung beitragen. Es ist aber auch unabhängig von der Technik möglich, die nicht benötigten Lichtempfangselemente aktiv zu lassen und lediglich deren Empfangssignal nicht auszulesen oder in der Auswertung nicht zu beachten. Statt auf Ebene des Lichtempfängers kann auch zuvor optisch dafür gesorgt werden, dass die nicht benötigten Lichtempfangselemente kein Licht empfangen, etwa mit einem elektro-optischen Shutter. Dunkelrauschen wird so aber nicht eliminiert, und gerade bei SPADs kann dies einen erheblichen Anteil haben.

Der Sensor weist bevorzugt eine zweite Ablenkeinheit auf, um den remittierten Sendelichtstrahl aus dem Ablenkwinkel auf den Lichtempfänger zu führen. Damit ist auch empfangsseitig ein Scanprinzip vorgesehen. Deshalb genügt als Lichtempfänger ein Einzelempfänger, und so können im Vergleich zu einem Pixel einer Matrixanordnung sehr hochwertige Lichtempfänger beziehungsweise aufwändige elektronische Schaltkreise zu dessen Ansteuerung und Aufbereitung eingesetzt werden. Es besteht auch die Möglichkeit, einige wenige hochwertige beziehungsweise aufwändig verschaltete Empfangselemente zu dem Einzeldetektor zusammenzufassen, etwa um im Falle von SPADs eine gewisse Statistik zur erhöhten Robustheit gegen Fremdlicht- und Dunkelereignisse zu erreichen. Für die empfangsseitige Ablenkung stehen dieselben Techniken zur Verfügung wie für die sendeseitige Ablenkung. Besonders bevorzugt bewirkt die Ablenkeinheit in Doppelfunktion sowohl die Ablenkung des Sendelichts als auch des remittierten Sendelichts.

Die Steuer- und Auswertungseinheit ist bevorzugt dafür ausgebildet, eine Lichtlaufzeit (TOF, Time of Flight) des Sendelichtstrahls bis zum Empfang des remittierten Sendelichtstrahls zu bestimmen. Damit wird der Sensor entfernungsmessend, ganz wie üblicherweise die klassischen Laserscanner mit Drehspiegel, die somit zumindest in einigen Anwendungsfeldern durch einen Solid-State-Scanner oder hier genauer ein Solid-State-LiDAR (Light Detection and Ranging) ersetzt werden können.

Die Steuer- und Auswertungseinheit ist bevorzugt dafür ausgebildet, den Abstand des Referenzziels zu prüfen. Das Referenzziel dient also nicht mehr nur dazu, die Funktionsfähigkeit der Ablenkeinheit zu überwachen, sondern es wird der gesamte Messpfad geprüft. Wie oben schon erwähnt, kann über einen definierten erwarteten Pegel des Referenzsignals auch der Lichtsender überwacht werden. Falls der Sensor nicht Abstände misst, sondern andere Objekteigenschaften wie Kontrast oder Farbe, können auch solche Eigenschaften des Referenzziels mit überwacht werden. Solche Selbstüberwachungen sind insbesondere im Bereich der Personensicherheit (Safety) beziehungsweise in mobilen Anwendungen wie bei autonomen Fahrzeugen von Relevanz. Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines optoelektronischen Sensors mit Sendestrahlablenkung ohne bewegte mechanische Teile und internem Referenzziel;
- Fig. 2: eine schematische Darstellung einer weiteren Ausführungsform des opto-elektronischen Sensors mit Strahlablenkung durch Auswahl unter zahlreichen Lichtquellen;
- Fig. 3: eine schematische Darstellung einer weiteren Ausführungsform des opto-elektronischen Sensors mit sende- und empfangsseitiger Strahlablenkung ohne bewegte mechanische Teile;
- Fig. 4: eine schematische Darstellung einer weiteren Ausführungsform des opto-elektronischen Sensors mit aktivem Referenzziel;
- Fig. 5: eine schematische Darstellung einer weiteren Ausführungsform des opto-elektronischen Sensors mit zusätzlichem Referenzlichtstrahl;
- Fig. 6a: eine beispielhafte Anordnung des Referenzziels an einem Ende eines eindimensionalen Abtastbereichs;
- Fig. 6b: eine beispielhafte Anordnung von Referenzzielen an beiden Enden eines eindimensionalen Abtastbereichs;
- Fig. 6c: eine beispielhafte Anordnung des Referenzziels innerhalb eines eindimensionalen Abtastbereichs;
- Fig. 6d: eine beispielhafte Anordnung von Referenzzielen an einem eindimensionalen Abtastbereich, die unterschiedlich starke Referenzsignale erzeugen;
- Fig. 7a: eine beispielhafte Anordnung eines Referenzziels an einer Kante eines zweidimensionalen Abtastbereichs;
- Fig. 7b: eine beispielhafte Anordnung von Referenzzielen an den zwei seitlichen Kanten eines zweidimensionalen Abtastbereichs;
- Fig. 7c: eine beispielhafte Anordnung von Referenzzielen an der oberen und unteren Kante eines zweidimensionalen Abtastbereichs;
- Fig. 7d: eine beispielhafte Anordnung von Referenzzielen rundum an den Kanten eines zweidimensionalen Abtastbereichs;
- Fig. 7e: eine beispielhafte Anordnung von Referenzzielen an den Ecken eines zweidimensionalen Abtastbereichs;
- Fig. 7f: eine beispielhafte Anordnung eines Referenzziels an einem beliebigen, eigens angefahrenen Ort;
- Fig. 7g: eine beispielhafte Anordnung von Referenzzielen ähnlich Figur 7c an der oberen und unteren Kante eines zweidimensionalen Abtastbereichs, die zudem unterschiedlich starke Referenzsignale erzeugen;
- Fig. 7h: eine beispielhafte Anordnung von Referenzzielen ähnlich Figur 7b an den zwei seitlichen Kanten eines zweidimensionalen Abtastbereichs, die über ihre Längserstreckung unterschiedlich starke Referenzsignale erzeugen;
- Fig. 7i: eine beispielhafte Anordnung von Referenzzielen irgendwo innerhalb eines zweidimensionalen Abtastbereichs; und
- Fig. 7j: eine beispielhafte Anordnung von teiltransparenten Referenzzielen in einem zweidimensionalen Abtastbereich, die ein Muster bilden.

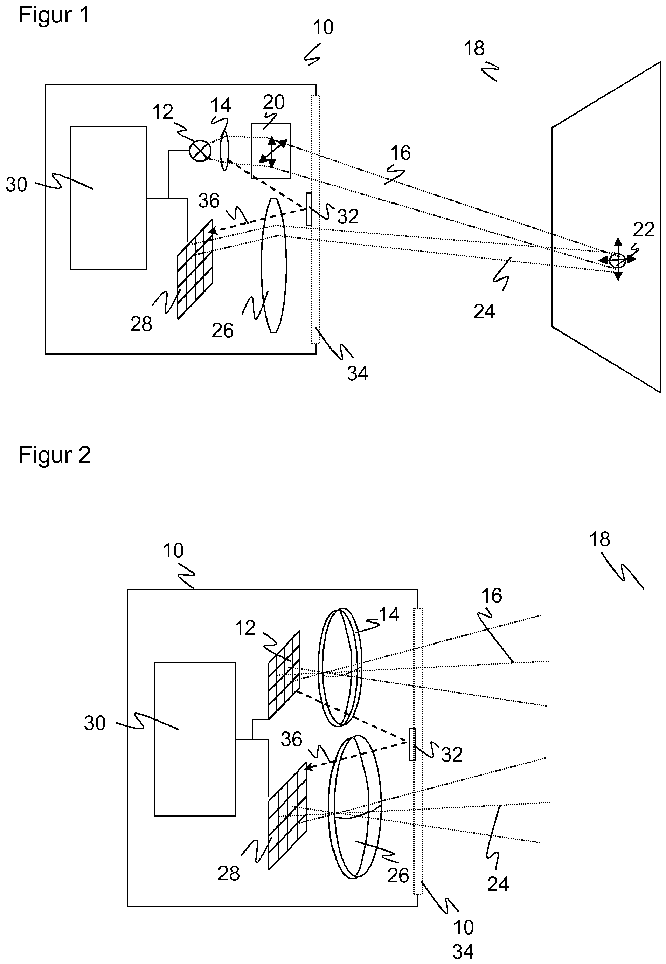

Figur 1 zeigt eine schematische Darstellung eines optoelektronischen Sensors 10 oder Solid-State-Scanners. Mit einem Lichtsender 12, der üblicherweise lichtstark ist und insbesondere eine Laserquelle aufweist, wird durch eine Sendeoptik 14 ein Sendelichtstrahl 16 in einen Überwachungsbereich 18 ausgesandt. Mit Hilfe einer Ablenkeinheit 20 kann der Sendelichtstrahl 16 auf einen gewünschten variablen Messpunkt 22 ausgerichtet werden. Mit entsprechenden Abtastmustern wird dadurch nacheinander ein zeilenförmiger oder flächiger Überwachungsbereich 18 abgetastet, wobei auch ein nahezu beliebiges anderes Abtastmuster denkbar ist.

Die Ablenkeinheit 20 ist nur schematisch dargestellt. Es gibt dafür verschiedenste Umsetzungsmöglichkeiten, wie eine Piezo-Aktorik, welche die laterale Position der Sendeoptik 14 beziehungsweise, da es auf die relative Lage dazwischen ankommt, des Lichtsenders 12 verändert. Weitere nicht abschließende Beispiele sind zusätzliche optische Elemente wie ein MEMS-Spiegel, ein schaltbares Flüssigkristallelement, ein Optical Phased Array, ein akusto-optischer Modulator, ein elektro-optische Modulator oder eine Flüssiglinse, in der die Grenzschicht zwischen zwei nicht mischbaren Medien durch Ansteuerung einer Elektrodenanordnung verkippt werden kann. Jedenfalls kommt die Ablenkeinheit 20 ohne makroskopische bewegliche Teile wie einen Drehspiegel oder dergleichen aus.

Treffen die Sendelichtstrahlen 16 nun in dem Überwachungsbereich 18 auf Objekte, so werden sie als remittierte Sendelichtstrahlen 24 zu dem Sensor 10 zurückgeworfen. Die remittierten Sendelichtstrahlen 24 gelangen durch eine Empfangsoptik 26 auf einen Lichtempfänger 28. Die Empfangsoptik 26 ist wie schon die Sendeoptik 14 nur durch eine einfache Linse repräsentiert, die stellvertretend für beliebige Optiken mit mehrlinsigen Objektiven, Blenden und sonstige optische Elemente steht. Auch eine reflexive oder diffraktive Optik ist vorstellbar. Auch der optische Grundaufbau mit biaxial nebeneinanderliegendem Lichtsender 12 und Lichtempfänger 28 ist nicht zwingend und durch jede an sich von einstrahligen optoelektronischen Sensoren bekannte Bauform ersetzbar. Ein Beispiel dafür ist eine koaxiale Anordnung mit oder ohne Strahlteiler.

Der Lichtempfänger 28 weist eine Vielzahl von Lichtempfangselementen auf und ist vorzugsweise als SPAD-Array ausgebildet. SPADs sind hochempfindlich und hoch integrierbar, und sie bieten die Möglichkeit, durch Absenken der Vorspannung unter die Durchbruchspannung praktisch inaktiv zu werden. Dadurch können jeweils nur solche SPADs aktiv geschaltet werden, die dem gewünschten Messpunkt 22 und damit dem erwarteten Auftreffort der remittierten Sendelichtstrahlen 24 entsprechen. Alternativ zu einem SPAD-Array ist eine Mehrfachanordnung von Photodioden oder APDs oder ein anderer Matrixempfänger beispielsweise in CCD- oder CMOS-Technik denkbar, bei dem dann gegebenenfalls nur bestimmte Pixel oder Pixelgruppen entsprechend gewünschten Messpunkten ausgelesen werden. Diese vorteilhafte Einschränkung des Gesichtsfeldes jeweils auf den gerade angeleuchteten Messpunkt 22 verringert die Verlustleistung und erhöht die Fremdlichtfestigkeit. Alternativ kann das Gesichtsfeld auch optisch begrenzt werden, um nicht beleuchtete Bereiche abzudunkeln, beispielsweise mit einem elektro-optischen Shutter.

Eine Steuer- und Auswertungseinheit 30 ist mit dem Lichtsender 12 und dem Lichtempfänger 28 verbunden. Damit wird die Ablenkeinheit 20 angesteuert, um jeweils den Sendelichtstrahl 16 auf den gewünschten Messpunkt 22 zu richten. Die Empfangssignale vorzugsweise nur der tatsächlich von dem remittierten Sendelichtstrahl 24 beleuchteten Lichtempfangselemente oder SPADs werden ausgewertet, um eine Lichtlaufzeit zu dem Messpunkt 22 des jeweils angetasteten Objekts in dem Überwachungsbereich 18 und daraus deren Abstand zu bestimmen. In anderen Ausführungsformen kann eine andere Eigenschaft der Objekte bestimmt werden, etwa deren Anwesenheit festgestellt werden oder ihre Reflexivität oder Farbe bestimmt werden. Zumindest Teile der Steuer- und Auswertungseinheit 30 können mit dem Lichtsender 12 beziehungsweise dem Lichtempfänger 28 auf einem gemeinsamen Baustein integriert werden, etwa eine Mustererzeugung für die Abfolge der Ablenkung oder pixelbezogene Auswertungen beziehungsweise Vorverarbeitungsschritte.

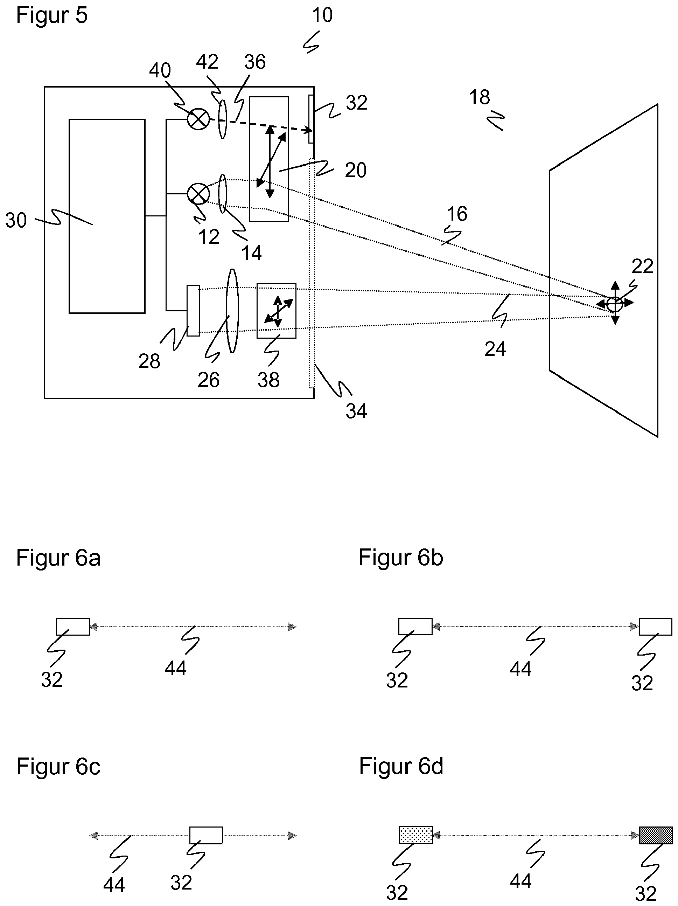

Um die Funktionsfähigkeit des Sensors 10 zu überwachen, insbesondere ob die Ablenkeinheit 20 den Sendelichtstrahl 16 tatsächlich an den gewünschten Messpunkt 22 ablenkt, weist der Sensor 10 ein Referenzziel 32 auf. Das Referenzziel 32 ist hier beispielhaft an einer Frontscheibe 34 des Sensors 10 angeordnet, durch den der Sendelichtstrahl 16 aus- und der remittierte Sendelichtstrahl 24 eintritt. Das Referenzziel 32 kann alternativ innen im Sendestrahlengang oder außen an der Frontscheibe 34 angeordnet werden oder in die Frontscheibe 34 integriert werden. Bezüglich der lateralen Positionierung, also an welchen Ablenkwinkeln das Referenzziel 32 von dem Sendelichtstrahl 16 getroffen wird, und auch der Ausgestaltung des Referenzziels 32 werden später unter Bezugnahme auf die Figuren 6a bis 7j noch zahlreiche Ausführungsbeispiele mit einem oder mehreren kleineren und größeren Referenzzielen 32 vorgestellt.

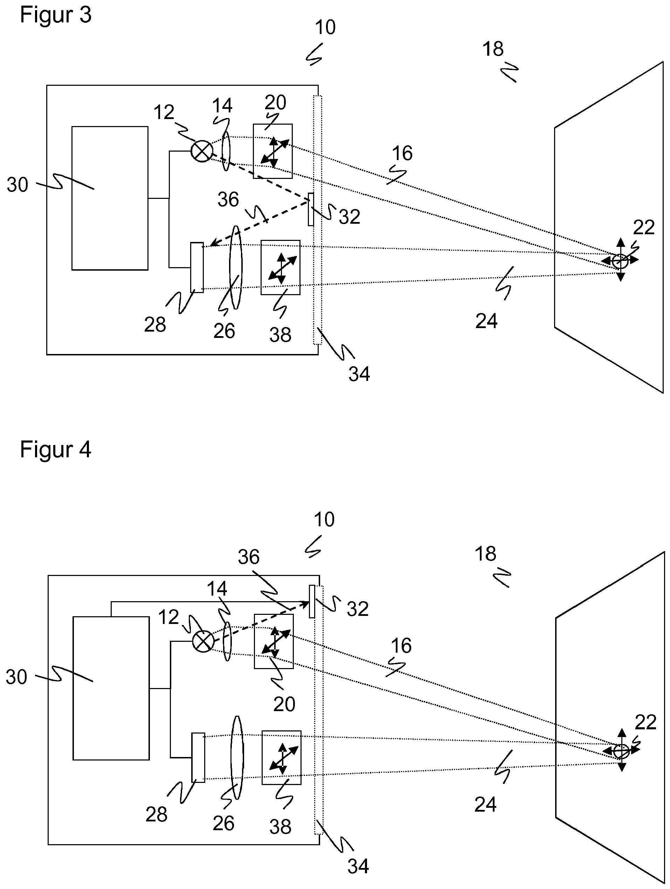

Im Falle der Figur 1 ist das Referenzziel 32 passiv, es lenkt also den Sendelichtstrahl 16 im entsprechenden Ablenkwinkel zurück auf den Lichtempfänger 28, und dort wird anstelle eines Messsignals ein Referenzsignal erzeugt. Dazu sind diverse Lichtführungen denkbar, insbesondere Lichtleiter und Reflektoren. Zu Figur 4 wird später auch ein aktives Referenzziel 32 erläutert, welches das Referenzsignal selbst erzeugt.

Der Sendelichtstrahl 16 fällt in entsprechenden Ablenkwinkeln insgesamt auf das Referenzziel 32. Alternativ kann auch lediglich ein Teil des Sendelichtstrahls 16 ausgekoppelt werden oder beispielsweise das Referenzziel 32 streifend bei einer Messung mit getroffen werden. Jedenfalls geschieht dies erst nach der Ablenkung, damit das Referenzsignal tatsächlich eine Überwachung der Ablenkeinheit 20 ermöglicht. Das ist bei herkömmlichen Referenzzielen anders, die dem Ausgleich von internen Signallaufzeiten und Driften dienen, wobei aber umgekehrt das Referenzziel 32 diese Funktionen mit übernehmen kann.

Das Referenzziel 32 wird im Verlauf der Abtastung des Überwachungsbereichs 18 mit dem Sendelichtstrahl 16 insbesondere in Zeitabständen entsprechend einem geforderten Testzyklus angefahren. Dann entsteht über einen Referenzlichtstrahl 36 ein Referenzsignal, das von der Steuer- und Auswertungseinheit 30 ausgewertet wird. Eine einfache Auswertung stellt lediglich fest, ob überhaupt ein Referenzsignal erzeugt wird. Es kann aber auch ein Vergleich mit einer Erwartung über den Pegel des Referenzsignals stattfinden, über den dann eine etwas selektivere Aussage möglich ist, die auch Verschmutzungen im Sendepfad, einen Leistungsabfall des Lichtsenders 12 und dergleichen beinhaltet. Gerade im Fall mehrerer Referenzziele 32 oder mehrerer Teilbereiche mit unterschiedlicher, definierter Dämpfung oder Reflexivität kann ein sehr eindeutiges Stimulierungsmuster erzeugt werden.

Da die Position des Referenzziels 32 bekannt ist, kann das Referenzziel 32 auch für einen Nullpunktabgleich verwendet werden. Dabei wird also ein X- oder X-Y-Koordinatensystem quer zu der Aussenderichtung überprüft, kalibriert oder regelmäßig nachgeführt. Weiterhin kann der Abstand des Referenzziels 32 anhand einer Lichtlaufzeit gemessen und mit einer Erwartung geprüft werden, wodurch dann der gesamte Messkanal überwacht ist. Das ist besonders in sicherheitsrelevanten Anwendungen von Vorteil.

Figur 2 zeigt eine schematische Darstellung einer weiteren Ausführungsform des Sensors 10. Im Gegensatz zu Figur 1 wird hier als Lichtsender 12 ein Array mit einer Vielzahl von einzeln oder gruppenweise ansteuerbaren Einzellichtsendern verwendet, beispielsweise ein VCSEL-Array oder eine Matrixanordnung mit anderen Lichtquellen, wie LEDs oder Kantenemitter-Laserdioden. Durch Auswahl bestimmter aktiver Einzellichtsender kann ein Sendelichtstrahl 16 in eine bestimmte Richtung ausgesandt werden, so dass dieser Lichtsender 12 zugleich die Funktion der Ablenkeinheit 20 übernimmt. Für dieses Ausführungsbeispiel gäbe es auch andere Absicherungsmöglichkeiten, damit nicht versehentlich die falschen Einzellichtquellen dauerhaft aktiv sind, aber eine Überwachung mit Hilfe des Referenzziels 32 ist zumindest möglich.

Figur 3 zeigt eine schematische Darstellung einer weiteren Ausführungsform des Sensors 10. Im Gegensatz zu Figur 1 ist hier auch empfangsseitig eine Ablenkeinheit 38 anstelle einer großflächig aufnehmenden Matrixanordnung von Pixeln mit erst nachgelagerter Selektion vorgesehen. Die empfangsseitige Ablenkeinheit 38 kann mit vergleichbaren Techniken aufgebaut sein wie die sendeseitige Ablenkeinheit 20 und weist ebenfalls keine bewegten mechanischen Teile auf. Es handelt sich also weiterhin um einen Solid-State-Scanner sogar noch in dem Sinne, dass sende- wie empfangsseitig ein echter Abtastvorgang stattfindet. In einer weiteren, nicht gezeigten Ausführungsform nutzen Sendelichtstrahl 16 und remittierter Sendelichtstrahl 24 dieselbe dann gemeinsame Ablenkeinheit 20, 38.

Figur 4 zeigt eine schematische Darstellung einer weiteren Ausführungsform des Sensors 10. Anders als bei den bisherigen Ausführungsformen ist das Referenzziel 32 nicht mehr passiv, lenkt also nicht den Sendelichtstrahl 16 auf den Lichtempfänger 28 um. Vielmehr weist das nun aktive Referenzziel 32 einen zusätzlichen Referenzlichtempfänger auf, der das Referenzsignal erzeugt und an die Steuer- und Auswertungseinheit 30 weiterleitet. Es ist denkbar, im Strahlengang des Referenzlichtstrahls 36 zunächst eine passive Strahlumlenkung vorzusehen und das aktive Referenzziel 32 entsprechend anders anzuordnen und somit nur indirekt mit dem Sendelichtstrahl 20 zu beleuchten. Außerdem ist das aktive Referenzziel 32 zwar mit einer empfangsseitigen Ablenkeinheit 38 wie in Figur 3 gezeigt, kann aber ebenso auch in den zu Figur 1 und 2 erläuterten Ausführungsformen das passive Referenzziel 32 ersetzen. Außerdem können, wie schon erwähnt, in allen Ausführungsformen mehrere Referenzziele 32 vorgesehen sein, und zwar auch gemischt aktive und passive Referenzziele 32.

Figur 5 zeigt eine schematische Darstellung einer weiteren Ausführungsform des Sensors 10. In dieser Ausführungsform ist ein zusätzlicher Referenzlichtsender 40 mit optionaler eigener Kollimationsoptik 42 vorgesehen, der den Referenzlichtstrahl 36 zusätzlich zu dem Sendelichtstrahl 16 erzeugt. Sendelichtstrahl 16 und Referenzlichtstrahl 36 werden gemeinsam und gleichartig von der Ablenkeinheit 20 abgelenkt. Somit kann das gesamte Abtastmuster parallel auf einem ortsauflösenden aktiven Referenzziel 32 verfolgt werden. Alternativ wird nur eine Position oder werden nur einige Referenzpositionen mit einem einfacheren Referenzziel 32 überwacht. Wie in allen Ausführungsformen kann auch nur eine Ablenkung in einer Richtung vorgesehen sein, der Sensor 10 also ein Zeilenscanner sein, und dementsprechend bewegt sich auch der Referenzlichtstrahl 36 nur in Zeilenrichtung.

Auch die Ausführungsform mit zusätzlichem Referenzlichtsender 40 kann mit den zu Figuren 1 bis 4 erläuterten Ausführungsformen beliebig kombiniert werden. Anstelle der Verwendung eines zusätzlichen Referenzlichtsenders 40 kann auch ein Teil des Sendelichtstrahls 16 als Referenzlichtstrahl 26 ausgekoppelt werden, oder ein Teil des Strahlquerschnitts des Sendelichtstrahls 16 wird streifend als Referenzlichtstrahl 36 genutzt.

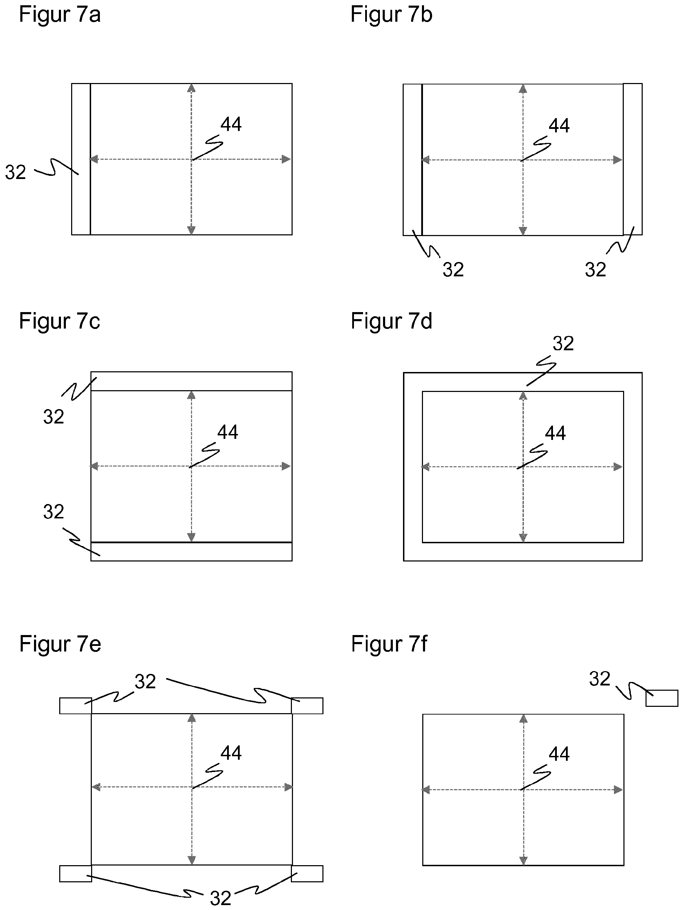

Im Anschluss werden nun unter Bezugnahme auf die Figuren 6a-6d einige beispielhafte Ausgestaltungen und Anordnungen von Referenzzielen 32 bei zeilenförmiger Ablenkung und dann unter Bezugnahme auf die Figuren 7a bis 7j bei flächiger Ablenkung erläutert. Alle diese Referenzziele können aktiv oder passiv sein, und die jeweils beispielhaft gezeigten Anordnungen und Ausgestaltungen können auch kombiniert werden.

Figur 6a zeigt eine beispielhafte Anordnung des Referenzziels 32 an einem Ende eines eindimensionalen Abtastbereichs 44, der durch einen Pfeil angedeutet ist. Natürlich kann das Referenzziel 32 ebenso an dem anderen, rechten Ende angeordnet werden. Der Abtastbereich 44 entspricht einem zeilenförmigen Überwachungsbereich 18. Das Referenzziel 32 wird vorzugsweise jeweils zyklisch zu Beginn einer Zeilenabtastung angefahren, d.h. sozusagen die Abtastung mit einem für den Überwachungsbereich 18 etwas zu weit nach links weisenden Ablenkwinkel begonnen. Es ist aber weder zwingend erforderlich, den Abtastbereich 44 kontinuierlich von links nach rechts, rechts nach links oder hin- und her zu verfahren, sondern es kann prinzipiell beliebig im Abtastbereich 44 und auf das Referenzziel 32 gesprungen werden. Das alles gilt sinngemäß auch für die nachfolgend erläuterten Konfigurationen.

Figur 6b zeigt eine beispielhafte Anordnung von Referenzzielen 32 an beiden Enden eines eindimensionalen Abtastbereichs 44. Dadurch wird die Ablenkung bei regelmäßigem Zeilenscan etwas häufiger und in zwei unterschiedlichen Positionen getestet, so dass zuverlässiger davon ausgegangen werden kann, dass auch alle Zwischenpositionen korrekt sind. Außerdem können die beiden bekannten Randpositionen der Referenzziele 32 genutzt werden, um das Koordinatensystem der Abtastung zu prüfen beziehungsweise festzulegen.

Figur 6c zeigt eine beispielhafte Anordnung des Referenzziels 32 innerhalb eines eindimensionalen Abtastbereichs 44. Diese Referenzziel 32 verdeckt einen Teil des relevanten Messbereichs, was aber möglicherweise hingenommen wird, wenn beispielsweise bei eng begrenztem möglichen Ablenkwinkel der Ablenkeinheit 20 der Rand nicht zur Verfügung steht. Denkbar ist auch, dass nur die Teile rechts und links des Referenzziels 32 für die Messung relevant sind, also separierte ROIs abgetastet werden und das Referenzziel 32 in einer Lücke dazwischen angeordnet ist. Außerdem ist denkbar, dass das Referenzsignal eines teiltransparenten Referenzziels 32, das ja wegen des kürzesten Lichtwegs zeitlich vor dem Messsignal entsteht, in der Auswertung separiert wird oder beispielsweise durch Mittelung ausgefiltert wird, so dass also am Ablenkwinkel des Referenzziels 32 sowohl gemessen als auch das Referenzsignal erzeugt wird.

Figur 6d zeigt eine beispielhafte Anordnung von Referenzzielen 32 ähnlich Figur 6b, wobei aber nun die beiden Referenzziele 32 unterschiedlich starke Referenzsignale erzeugen, wie durch Schraffur angedeutet. Das lässt sich durch unterschiedliche Dämpfungen, Schwärzungen, Reflexivitäten, Verstärkungen und ähnliche Effekte erreichen. Durch die unterschiedlichen Intensitäten der Referenzsignale sind genauere Prüfungen möglich. Es können auch mehr als zwei Referenzziele 32 für unterschiedlich starke Referenzziele neben wie innerhalb des Abtastbereichs 44 angeordnet werden.

Die Figuren 7a-d zeigen beispielhafte Anordnungen von Referenzzielen 32 an unterschiedlichen Kanten eines nun zweidimensionalen Abtastbereichs 44. Die Ausführungsformen nach Figur 7a-b mit einem streifenförmigen Referenzziel 32 am linken und/oder rechten Rand eignen sich besonders für ein zeilenweises Abscannen, wobei dann je Zeile das zu Figur 6a-b analog gilt. Eine Anordnung nach Figur 7c mit einem streifenförmigen Referenzziel am oberen und/oder unteren Rand ist eher für eine spaltenweise Abtastung geeignet. Ein um den Rand umlaufendes Referenzziel 32 wie in Figur 7d eignet sich für zeilen- wie spaltenweise Abtastung und auch für variable Muster. Dabei ist keine Anordnung von Referenzzielen 32 zwingend auf ein bestimmtes Abtastmuster festgelegt.

In der Ausführungsform nach Figur 7e sind Referenzziele 32 an mindestens einer Ecke des Abtastbereichs 44 angeordnet. Diese Positionen schließen die übrigen Ablenkwinkel ein, so dass deren erfolgreiche Überprüfung besonders zuverlässig den Schluss auf eine funktionsfähige Ablenkeinheit 20 zulässt.

In der Ausführungsform nach Figur 7f befindet sich ein Referenzziel 32 an einer beliebigen Position am Rand, wie konkret gezeigt beabstandet zum Rand oder auch innerhalb des Abtastbereichs 44. Diese Position wird nicht in das übliche Abtastmuster integriert wie vorzugsweise bisher, sondern sprunghaft zu bestimmten Testzeitpunkten angefahren. Damit kann insbesondere ein sehr genaues Zeitverhalten des Tests vorgegeben werden, und es besteht völlig Designfreiheit, wo das Referenzziel 32 untergebracht wird.

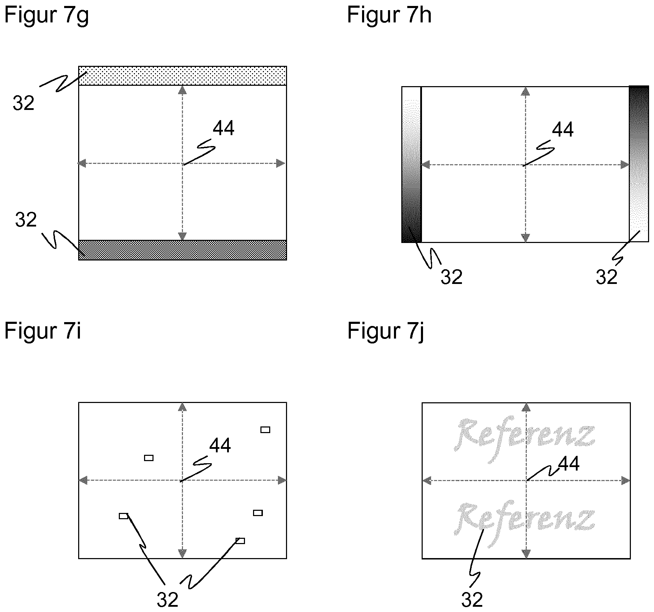

Figur 7g zeigt eine beispielhafte Anordnung von Referenzzielen ähnlich Figur 7c an der oberen und unteren Kante eines zweidimensionalen Abtastbereichs, die zudem unterschiedlich starke Referenzsignale erzeugen. Es handelt sich gleichsam um das zweidimensionale Analogon der Ausführungsform nach Figur 7d mit ganz ähnlichen Nutzungsmöglichkeiten und Vorteilen. Derartige Referenzziele 32 für unterschiedlich starke Referenzsignale können an beliebiger Position angebracht werden, insbesondere allen in den Figuren 6a-7i gezeigten Positionen.

Figur 7h zeigt eine dieser zahlreichen weiteren Varianten mit unterschiedlich starken Referenzsignalen. Dabei variiert der Pegel des Referenzsignals gegenläufig über zwei längserstreckte Referenzziele 32, wobei der gezeigte kontinuierliche Verlauf durch diskrete Referenzziele 32 und Abstufungen ersetzbar wäre. Auch die konkrete Anordnung mit zwei seitlichen Streifen ist rein beispielhaft.

Figur 7i zeigt eine weitere beispielhafte Anordnung von Referenzzielen 32 irgendwo innerhalb des zweidimensionalen Abtastbereichs 44. Dabei könnten weitere Referenzziele 32 am Rand hinzukommen, und die Referenzziele 32 könnten für unterschiedlich starke Referenzsignale ausgelegt sein. Wie schon kurz zu Figur 6c erläutert, gibt es bei Anordnung von Referenzzielen 32 innerhalb des Abtastbereichs 44 eine Wechselwirkung mit der eigentlichen Messung, die aber beispielsweise als eine Art tote Pixel hingenommen wird, ohnehin nur Lücken zwischen ROIs betrifft oder durch geschickte Auswertung ausgeglichen wird, wobei ein Beispiel einer geschickten Auswertung die zu Figur 6c erwähnte zeitliche Separierung ist und ein weiteres Beispiel sogleich abschließend erläutert wird.

Figur 7j zeigt eine beispielhafte Anordnung von teiltransparenten Referenzzielen 32 in einem zweidimensionalen Abtastbereich 44, die ein Muster bilden. Das kann als komplexe Spielart der Ausführungsform nach Figur 7i verstanden werden. Das Muster bildet eine Art Wasserzeichen. Die Referenzsignale können möglicherweise durch zeitliche Separation von den Messsignalen getrennt werden. Das ist nicht immer möglich, beispielsweise weil die Steuer- und Auswertungseinheit 30 zu langsam oder nicht mehrzielfähig ist, also insbesondere gar nicht den zeitlichen Verlauf des Empfangssignals aufzeichnet. Dann kann die Tatsache ausgenutzt werden, dass allen Empfangssignalen stets das Muster der Referenzziele 32 aufgeprägt beziehungsweise überlagert ist. Zumindest in ausreichend dynamischen Szenerien, etwa bei mobilen Anwendungen, sind die Beiträge der Objektremissionen aus dem Überwachungsbereich 18 sehr unterschiedlich, vereinfachend zufällig verteilt. Wird also über mehrere Scans gemittelt, so bildet sich dabei das Muster erkennbar heraus.

## Patentansprüche

1. Optoelektronischer Sensor (10) zur Erfassung von Objekten in einem Überwachungsbereich (18), der einen Lichtsender (12) zum Aussenden eines Sendelichtstrahls (16), eine Ablenkeinheit (20) zum Ablenken des Sendelichtstrahls (16) ohne mechanische bewegte Teile oder höchstens mit mikromechanischen bewegten Teilen, um den Überwachungsbereich (18) abzutasten, einen Lichtempfänger (28) zum Erzeugen eines Empfangssignals aus dem von den Objekten remittierten Sendelichtstrahl (24) sowie eine Steuer- und Auswertungseinheit (30) aufweist, die dafür ausgebildet ist, anhand des Empfangssignals Informationen über die Objekte zu bestimmen,
**dadurch gekennzeichnet,**
**dass** der Sensor (10) mindestens ein Referenzziel (32) aufweist, das zumindest einen Teil des abgelenkten Sendelichtstrahls (16, 36) bei mindestens einem Ablenkwinkel der Ablenkeinheit (20) empfängt oder zu dem Lichtempfänger (28) zurückführt, um ein Referenzsignal zu erzeugen, und dass die Steuer- und Auswertungseinheit (30) dafür ausgebildet ist, anhand des Referenzsignals die Funktionsfähigkeit der Ablenkeinheit (20) zu prüfen.

2. Sensor (10) nach Anspruch 1,
wobei das Referenzziel (32) als Lichtumlenkung oder als Reflektor ausgebildet ist.

3. Sensor (10) nach Anspruch 2,
wobei das Referenzziel (32) den Sendelichtstrahl (16) zu einem bekannten Grad zurückführt, insbesondere mehrere Referenzziele (32) mit unterschiedlichem Grad.

4. Sensor (10) nach Anspruch 1,
wobei das Referenzziel (32) einen Referenzlichtempfänger aufweist, welcher das Referenzsignal erzeugt.

5. Sensor (10) nach einem der vorhergehenden Ansprüche,
wobei das Referenzziel (32) bei einem Ablenkwinkel angeordnet ist, der außerhalb des abgetasteten Überwachungsbereichs (18) liegt.

6. Sensor (10) nach einem der vorhergehenden Ansprüche,
wobei die Steuer- und Auswertungseinheit (30) dafür ausgebildet ist, mit Hilfe der Ablenkeinheit (20) periodisch eine Zeile und/oder ein zweidimensionales Muster abzutasten.

7. Sensor (10) nach einem der vorhergehenden Ansprüche,
wobei das Referenzziel (32) an einer Frontscheibe (34) des Sensors (10) angeordnet ist.

8. Sensor (10) nach einem der vorhergehenden Ansprüche,
wobei das Referenzziel (32) ein Muster aus teilreflektierenden Elementen im Strahlengang des Sendelichtstrahls (16) bei verschiedenen Ablenkwinkeln aufweist.

9. Sensor (10) nach einem der vorhergehenden Ansprüche,
der einen Referenzlichtsender (40) aufweist, um einen gegenüber dem Sendelichtstrahl (16) versetzten Referenzlichtstrahl (36) zu erzeugen, der von der Ablenkeinheit (20) mit dem Sendelichtstrahl (16) abgelenkt wird.

10. Sensor (10) nach einem der vorhergehenden Ansprüche,
wobei die Steuer- und Auswertungseinheit (30) dafür ausgebildet ist, zu einem Testzeitpunkt den Sendelichtstrahl (16) mit Hilfe der Ablenkeinheit (20) in einen dem Referenzziel (32) entsprechenden Ablenkwinkel abzulenken.

11. Sensor (10) nach einem der vorhergehenden Ansprüche,
wobei die Steuer- und Auswertungseinheit (30) dafür ausgebildet ist, einen Winkelursprung der Ablenkwinkel anhand des Referenzsignals zu prüfen und/oder festzulegen.

12. Sensor (10) nach einem der vorhergehenden Ansprüche,
wobei der Lichtempfänger (28) eine Vielzahl von Lichtempfangselementen aufweist, insbesondere SPADs, die jeweils unterschiedlichen Ablenkwinkeln zugeordnet sind, wobei insbesondere die Steuer- und Auswertungseinheit (30) dafür ausgebildet ist, jeweils nur diejenigen Lichtempfangselemente zu aktivieren oder auszulesen, die dem jeweiligen aktuellen Ablenkwinkel des Sendelichtstrahls (16) entsprechen.

13. Sensor (10) nach einem der Ansprüche 1 bis 11,
der eine zweite Ablenkeinheit (38) aufweist, um den remittierten Sendelichtstrahl (24) aus dem Ablenkwinkel auf den Lichtempfänger (28) zu führen.

14. Sensor (10) nach einem der vorhergehenden Ansprüche,
wobei die Steuer- und Auswertungseinheit (30) dafür ausgebildet ist, eine Lichtlaufzeit des Sendelichtstrahls (16) bis zum Empfang des remittierten Sendelichtstrahls (24) zu bestimmen und insbesondere den Abstand des Referenzziels (32) zu prüfen.

15. Verfahren zur Erfassung von Objekten in einem Überwachungsbereich (18), bei dem ein Sendelichtstrahl (16) ausgesandt und von einer Ablenkeinheit (20) in einen Ablenkwinkel abgelenkt wird, um den Überwachungsbereich (18) abzutasten, wobei die Ablenkung ohne Bewegung von mechanischen Teilen, allenfalls von mikromechanischen Teilen erfolgt, wobei der von den Objekten remittierte Sendelichtstrahl (24) wieder empfangen und ein daraus erzeugtes Empfangssignal ausgewertet wird, um Informationen über die Objekte zu bestimmen,
**dadurch gekennzeichnet,**
**dass** zumindest ein Teil des abgelenkten Sendelichtstrahls (16, 36) bei mindestens einem Ablenkwinkel der Ablenkeinheit (20) von einem Referenzziel (32) empfangen oder zurückgeworfen wird, um ein Referenzsignal zu erzeugen, anhand dessen die Funktionsfähigkeit der Ablenkeinheit (20) geprüft wird.
